# EUROPÄISCHE PATENTSCHRIFT

(11) **EP 2 726 234 B1**
(45) Veröffentlichungstag und Bekanntmachung des Hinweises auf die Patenterteilung: **20.07.2016**
(21) Anmeldenummer: 12735111.2
(22) Anmeldetag: 29.06.2012
(51) Int. Cl.: B22D 19/00, F01L 1/047, B21D 53/84, F16H 53/02

(54) **NOCKENWELLE MIT AXIAL VERSCHIEBBAREM NOCKENPAKET**
CAMSHAFT WITH AXIALLY DISPLACEABLE CAM-PACKET
ARBRE A CAMES À PAQUET DE CAMES DÉPLACABLE AXIALEMENT

(30) Priorität: 30.06.2011 DE 102011051480
(43) Veröffentlichungstag der Anmeldung: 07.05.2014
(73) Patentinhaber: Thyssenkrupp Presta Teccenter Ag, 9492 Eschen (LI)
(72) Erfinder: BINDER, Thomas, A-6800 Feldkirch (AT); WIESNER, Peter, FL-9493 Mauren (LI)
(74) Vertreter: ThyssenKrupp Intellectual Property GmbH
(86) Internationale Anmeldenummer: PCT/EP2012/062719
(87) Internationale Veröffentlichungsnummer: WO 2013/001067

(56) Entgegenhaltungen:
- EP-A2- 1 754 913
- CH-A5- 694 277
- DE-A1- 4 004 505
- DE-A1-102004 022 849
- DE-A1-102009 022 657
- DE-A1-102009 052 222
- DE-A1-102010 060 766
- DE-B3-102004 009 074
- JP-A- 56 039 356
- US-A- 5 041 253
- US-A1- 2006 266 492

## Beschreibung

Die Erfindung betrifft eine Nockenwelle mit einer Trägerwelle, die in einer Wellenachse drehbeweglich lagerbar ist, wobei auf der Trägerwelle wenigstens ein Nockenpaket axial verschieblich angeordnet ist, und wobei das Nockenpaket wenigstens zwei Nocken und wenigstens ein Verstellglied zur axialen Verstellung des Nockenpaketes umfasst.

Derartige Nockenwellen werden für Brennkraftmaschinen verwendet, die mit einem verstellbaren Ventilhub oder mit verstellbaren Ventilsteuerzeiten betrieben werden können. Die Ventile der Brennkraftmaschine werden über Nockenpakete angesteuert, die axial verschieblich auf der rotierenden Trägerwelle angeordnet sind. Durch die axiale Verschiebung des Nockenpaketes auf der Trägerwelle können die Ventile mit verschiedenen Nocken gesteuert werden, wobei die verschiedenen Nocken unterschiedliche Nockenformen aufweisen können. Dabei können sowohl die Nockenkuppen geometrisch unterschiedlich stark ausgeprägt sein oder die Position der Nockenkuppen in Umfangsrichtung variiert zueinander. Auch sind Nocken bekannt, die als Nullhubnocken ausgeführt sind.

Nockenpakete weisen mehrere Nocken auf, wobei wenigstens ein Verstellglied Bestandteil des Nockenpaketes ist, über das die axiale Verschiebung in das Nockenpaket eingeleitet wird.

### STAND DER TECHNIK

Aus der DE 10 2009 022 657 A1 ist eine Nockenwelle mit einer Trägerwelle bekannt, die in einer Wellenachse drehbeweglich lagerbar ist, um in einer Brennkraftmaschine betrieben zu werden. Auf der Trägerwelle ist ein Nockenpaket angeordnet, das beispielhaft aus vier Nocken ausgebildet ist. Das Nockenpaket umfasst ein Trägerrohr, das über eine Innenverzahnung und eine Außenverzahnung axial verschieblich auf der Trägerwelle angeordnet ist, sodass die Drehbewegung der Trägerwelle über einen geometrischen Formschluss auf das Trägerrohr übertragen wird. Das Trägerrohr ist dabei aus Kunststoff um die Nockenelemente gespritzt. Zur axialen Verschiebung des Nockenpaketes weist das Trägerrohr Axialanschläge auf, in denen außenumfänglich Kurvenbahnen eingebracht sind, die mit einem Übertragungselement zusammenwirken können.

Die DE10 2009 052 222 A1 offenbart ein Verfahren zum Herstellen eines Nockenwellenstücks. Ein Nockenwellenschaft umfasst eine Innenverzahnung zum Eingriff in die Verzahnung einer Trägerwelle. Auf dem Nockenwellenschaft sind eine Vielzahl von Nocken an vorbestimmten Positionen aufgebracht und mittels Presspassung befestigt.

Die DE 10 2004 011 586 A1 zeigt eine weitere Nockenwelle mit einer Trägerwelle, und es ist ein Trägerrohr gezeigt, das mit mehreren Nocken einteilig ausgeführt ist. Das Trägerrohr besitzt eine Innenverzahnung, die mit einer Außenverzahnung der Trägerwelle kämmt, um das Nockenpaket axial auf der Trägerwelle verschieblich anzuordnen, und um zugleich eine Drehübertragung der Trägerwelle auf das Nockenpaket durch einen geometrischen Formschluss zu schaffen. Zwischen den Nockenkonturen weist das Trägerrohr ein Lagerelement auf, um das Nockenpaket in einem Lagerbock drehbar zu lagern, der beispielsweise Bestandteil eines Zylinderkopfes sein kann.

Nachteilhafterweise weisen die Nockenwellen gemäß dem Stand der Technik Nockenpakete auf, die in gebauter Variante ein aus einem Stahlwerkstoff gefertigtes Trägerrohr erforderlich machen, um verschiedene Steuerelemente und Verstellglieder zu einem Nockenpaket aufwendig zu fügen und die massiv gefertigt werden müssen. Das Trägerrohr dient dabei zur Aufnahme auf der Trägerwelle und weist die notwendige Innenverzahnung auf, die mit der Außenverzahnung auf der Trägerwelle kämmen kann. Nachteilhafterweise entsteht durch die Verwendung eines Trägerrohres zur Aufnahme der Nocken und Verstellglieder ein aufwendiger Aufbau, und die Nocken müssen mit einer notwendigen Verbindungstechnik auf dem Trägerrohr angeordnet werden. Sind das Trägerrohr und die Nocken sowie beispielsweise auch das Verstellglied insgesamt einteilig ausgeführt, entsteht ein aufwendig herzustellendes Bauteil, an dem eine Vielzahl von Bearbeitungsoperationen ausgeführt werden müssen und sämtliche Bauteile müssen aus einem gleichen Werkstoff hergestellt werden. Jedoch ist es technisch vorteilhaft, sowohl eine spanende Bearbeitung als auch eine thermische Behandlung verschiedener Elemente des Nockenpaketes einzeln vornehmen zu können.

### OFFENBARUNG DER ERFINDUNG

Es ergibt sich die Aufgabe der vorliegenden Erfindung, eine Nockenwelle mit einem Nockenpaket zu schaffen, das die vorstehend bezeichneten Nachteile des Standes der Technik überwindet und einen einfachen Aufbau aufweist, wobei die verschiedenen Elemente des Nockenpaketes auch einzeln spanend bearbeitet und thermisch behandelt werden können.

Diese Aufgabe wird ausgehend von einer Nockenwelle mit einem axial verschiebbaren Nockenpaket gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Nocken und das wenigstens eine Verstellglied in axial benachbarter Anordnung mit einem Trägerkörper eingegossen und durch diesen miteinander verbunden sind, wobei die Nocken und/oder das Verstellglied eine Innenverzahnung aufweisen, die mit einer Außenverzahnung der Trägerwelle axial verschiebbar im Eingriff steht.

Die Erfindung geht dabei von dem Gedanken aus, die einzelnen Steuerelemente des Nockenpaketes unmittelbar miteinander in Verbindung zu bringen, um das Nockenpaket ohne die Verwendung eines Trägerrohres auszuführen. Die Verbindung der einzelnen Steuerelemente wie die Nocken, das Verstellglied oder auch ein Lagerelement werden erfindungsgemäß in einem Trägerkörper eingegossen, und durch die Gießtechnik wird ein einfacher Aufbau des Nockenpaketes ermöglicht, wobei die verschiedenen Elemente des Nockenpaketes zuvor einzeln spanend bearbeitet und thermisch behandelt werden können, bevor diese durch den Körper miteinander vergossen werden. Dabei können zuvor einzelne Nocken oder ein oder mehrere Nocken und beispielsweise das Verstellglied mit stoffschlüssigen Verfahren oder mechanisch mit Verbindungselementen miteinander zumindest teilweise verbunden werden, um anschließend mit dem erfindungsgemäßen Verfahren mit dem Körper vergossen zu werden. Durch die direkte Verbindung der Nocken und des wenigstens einen Verstellgliedes mit den benachbart zu diesen angeordneten Nocken, im allgemeinen Gedanken der Erfindung ferner jedes an einem Nockenpaket beteiligten Elementes, und durch das Angießen eines Körpers erübrigt sich die Verwendung eines metallischen und als Einzelteil zuvor bereitzustellenden Trägerrohres, und die Nocken und das wenigstens eine Verstellglied können direkt auf der Trägerwelle axial verschiebbar angeordnet werden. Durch die direkte Verbindung der Nocken untereinander und des Verstellgliedes mit den benachbart zu diesem angeordneten Nocken wird ein Verbund aus einzelnen Elementen geschaffen, die vor der gemeinsamen Verbindung miteinander einzeln bearbeitet werden können. Nachdem der Verbund aus den Nocken und dem Verstellglied geschaffen ist, kann dieser ohne weitere Verwendung eines einzelnen Trägerrohres oder eines sonstigen Elementes direkt auf der Trägerwelle angeordnet werden.

Die Erfindung bietet den besonderen Vorteil, die Nocken und das Verstellglied für die direkte Anordnung auf der Trägerwelle mit einer Innenverzahnung auszuführen, die mit einer Außenverzahnung der Trägerwelle axial verschiebbar im Eingriff stehen und gleichzeitig in Umfangsrichtung Drehmomente übertragen kann. Die Innenverzahnung ist unmittelbar in die Nocken und/oder in das Verstellglied eingebracht, nicht jedoch in den gegossenen Trägerkörper, um das gebildete Nockenpaket axial beweglich und drehübertragend auf der Trägerwelle anzuordnen. Der Trägerkörper hat damit vorzugsweise keinen das Drehmoment übertragenden Kontakt mit der Trägerwelle.

Mit weiterem Vorteil können beispielsweise lediglich außenseitige Elemente, beispielsweise eine erste außenseitige Nocke und eine gegenüberliegende, zweite außenseitige Nocke, mit einer Innenverzahnung ausgeführt sein, die mit einer beispielsweise durchgehenden Außenverzahnung auf der Trägerwelle in Eingriff stehen kann. Dadurch wird der Vorteil erreicht, dass lediglich zwei Elemente des Nockenpaketes mit einer Innenverzahnung ausgeführt werden müssen, die vorzugsweise außenseitig das Nockenpaket abschließen. Weitere Elemente des Nockenpaketes, die zwischen den außenseitig angeordneten Elementen mit Innenverzahnung angeordnet sind, können optional weitere Innenverzahnungen aufweisen.

Der gegossene Trägerkörper kann Aussparungen aufweisen, durch die sich die Innenverzahnung radial nach innen weisend hindurch erstreckt, sodass trotz Vorhandensein eines Trägerkörpers, der sich beispielsweise über die gesamte Länge des Nockenpaketes hinweg erstreckt, die Innenverzahnung in den Nocken und/oder im Verstellglied in direkten Eingriff mit der Außenverzahnung auf der Trägerwelle gebracht werden kann. Die Nocken und das Verstellglied weisen Durchgangsbohrungen auf, durch die sich die Trägerwelle hindurch erstreckt, und auf der Innenseite der Durchgangsbohrungen kann die Innenverzahnung auf einzelne Bereiche begrenzt sein. Wird der Trägerkörper eingegossen, so umschließt dieser die Bereiche randseitig, in denen die Innenverzahnung in den Durchgangsbohrungen vorhanden ist, sodass sich die Innenverzahnung durch die so gebildeten Aussparungen im Trägerkörper radial nach innen erstrecken kann.

Weiterhin können in den Durchgangsbohrungen Ausbuchtungen vorgesehen sein, in die ein Sicherungsabschnitt des Trägerkörpers eingebracht ist. Beispielsweise können drei oder mehr Ausbuchtungen über dem Umfang der Durchgangsbohrungen vorzugsweise gleich verteilt vorgesehen sein, und in jede der Ausbuchtungen erstreckt sich ein Sicherungsabschnitt des Trägerkörpers. Der Sicherungsabschnitt wird dabei durch ein Abformen in den Ausbuchtungen gebildet, indem das Material des Trägerkörpers eingegossen wird und so in die Ausbuchtungen gelangt. Dadurch entsteht ein Formschluss zwischen dem gegossenen Trägerkörper und den Nocken oder dem Verstellglied in Umfangsrichtung.

Auch ist es denkbar, dass der gegossene Trägerkörper umlaufende Kragen aufweist, die in Ausnehmungen eingegossen sind, wobei die Ausnehmungen in den Nocken eingebracht sind, sodass eine axiale Sicherung der Nocken gebildet wird. Auch bei der Herstellung der Kragen im Gießverfahren des Trägerkörpers werden diese in den Ausnehmungen der Nocken oder des Verstellgliedes eingeformt, insbesondere kann beim Erstarren und/oder beim Erkalten des gegossenen Trägerkörpers ein zumindest geringes Schrumpfungsmaß auftreten, das auf die Nocken und das Verstellglied eine dauerhafte Axialverspannung bewirkt. Beispielsweise kann zwischen den Nocken und dem Verstellglied ein Bund vorgesehen sein, der einen freien Abschnitt des gegossenen Trägerkörpers bildet und so eine Pufferwirkung bei der Axialverspannung erzeugt. Die Ausnehmungen, in die die Kragen des Trägerkörpers eingreifen, sind auf der Seite der Nocken angeordnet, die dem Verstellglied abgewandt ist, sodass beim Verspannen der Nocken und des Verstellgliedes ein Formschluss zwischen den Nocken und dem Verstellglied entsteht.

Mit weiterem Vorteil kann der gegossene Trägerkörper Anformungen aufweisen, die sich in Aussparungen hinein erstrecken, die in den Nocken eingebracht sind. Durch die Anformungen, die sich in den Aussparungen abformen, kann eine Verdrehsicherung der Nocken um die Wellenachse gebildet werden.

Das Verstellglied kann wenigstens zweiteilig ausgebildet sein, wobei ein erster Teil durch ein Steuerkonturelement und ein weiterer Teil kann durch den gegossenen Trägerkörper gebildet werden, insbesondere sodass das Steuerkonturelement im Trägerkörper eingebettet wird. Die Einbettung des Steuerkonturelementes in den Trägerkörper erfolgt durch ein Umgießen des Materials des Trägerkörpers um das Steuerkonturelement, sodass dieses nur noch mit der Steuerkontur in der Außenfläche aus dem Trägerkörper herausschaut. Somit weist das Verstellglied keine Innenverzahnung auf, und ist somit nicht an der Verbindung zwischen dem Nockenpaket und der Trägerwelle beteiligt. Vielmehr kann das Steuerkonturelement in der Handhabung behandelt werden wie ein Nockenelement, und das Material des Trägerkörpers unterwandert sowohl die Nocken als auch das Steuerkonturelement.

Mit weiterem Vorteil kann in wenigstens einen der Nocken, jedoch vorzugsweise im Verstellglied zumindest eine Rastnut eingebracht sein, die zur axialen Verrastung des Nockenpaketes mit einem Rastmittel zusammenwirken können, das in der Trägerwelle angeordnet ist. Das Rastmittel kann beispielsweise eine federbelastete Kugel sein, die in die Rastnuten eingedrückt wird. Damit können definierte axiale Positionen des Nockenpaketes durch die axiale Verstellung definiert werden, wobei die Anzahl der Rastnuten vorzugsweise mit der Anzahl der Nocken verschiedener Nockenkonturen korrespondiert. Mit besonderem Vorteil können die Rastnuten in Elementen des Nockenpaketes eingebracht sein, die nicht mit einer Innenverzahnung ausgeführt sind. Die Nocken und das Verstellglied können zumindest über Teilbereiche ihrer jeweiligen Stirnseiten miteinander verbunden sein. Die Stirnseiten können durch Planflächen gebildet sein, zu denen die Wellenachse eine Flächennormale bildet. Werden die Nocken und das Verstellglied in axial benachbarter Anordnung plan aufeinander gebracht, kann die Verbindung zwischen den Nocken und/oder dem Verstellglied vorgenommen werden. Mit besonderem Vorteil können die Verbindungen als stoffschlüssige Verbindungen ausgeführt werden.

Die stoffschlüssigen Verbindungen zwischen den Nocken und dem wenigstens einen Verstellglied und den dazu benachbarten Nocken können mittels Schweißverbindungen ausgeführt sein, und es können Schweißverbindungen beispielsweise außenumfänglich und/oder innenumfänglich angeordnet werden. Die Schweißverbindungen können beispielsweise mit einem Laserstrahl-Schweißverfahren oder mit einem Elektronenstrahl-Schweißverfahren ausgeführt werden, um die wärmebeeinflusste Materialzone in den Nocken und/oder im Verstellglied zu minimieren. Ferner kann durch diese Schweißverfahren der thermische Verzug der Paketanordnung des Nockenpaketes minimiert werden. Mit besonderem Vorteil kann die Schweißverbindung mit Bildung einer Dampfkapillare erzeugt werden, um eine besonders tiefe Einschweißung zwischen den Stirnflächen der Nocken und/oder des Verstellgliedes zu erzeugen, sodass die Schweißverbindung mechanisch besonders hoch belastbar ist.

Nach einer möglichen Ausführungsform der Erfindung können die stoffschlüssigen Verbindungen zwischen den Nocken und dem wenigstens einen Verstellglied mittels Lötverbindungen und/oder Klebeverbindungen ausgeführt werden. Grundsätzlich kann nach Herstellung der stoffschlüssigen Verbindungen zwischen den Nocken und dem Verstellglied eine mechanische Endbearbeitung der Funktionsflächen der Nocken und/oder des Verstellgliedes erfolgen.

Mit weiterem Vorteil können die Verbindungen zwischen den Nocken untereinander und des Verstellgliedes mit den benachbart dazu angeordneten Nocken über zumindest einen und vorzugsweise mehrere auf dem Umfang des Nockenpaketes gleich verteilte Zuganker ausgebildet sein, der oder die sich durch die Nocken und das Verstellglied hindurch erstrecken. Die Zuganker können durch Gewindebolzen oder dergleichen gebildet sein und können nach Anordnung im Nockenpaket eine Zugspannung aufnehmen. Folglich werden die Nocken und das Verstellglied axial aufeinander gepresst, um einen mechanisch belastbaren Verbund aus den Nocken und dem Verstellglied zu bilden. Alternativ ist auch denkbar, die Nocken miteinander und das Verstellglied mit seinen benachbarten Nocken durch eine oder mehrere Nietverbindungen zu verbinden. Mit weiterem Vorteil können die Nocken und das Verstellglied beispielsweise miteinander verstiftet werden, oder es können an den Stirnseiten der Nocken und des Verstellgliedes Formschlussgeometrien angebracht sein, um anschließend die Zuganker durch die Nocken und das Verstellglied hindurchzuführen und unter Zugspannung zu setzen.

Als weitere mögliche Ausführungsform der Erfindung können die Verbindungen der Nocken und des wenigstens einen Verstellgliedes mit seinen benachbarten Nocken jeweils über zumindest ein formschlüssig wirkendes mechanisch angebrachtes Fügeelement ausgebildet sein, das vorzugsweise an den Nocken und/oder am wenigstens einen Verstellglied angeordnet oder zwischen den Stirnseiten ausgebildet ist und zusätzlich zum gegossenen Trägerkörper formschließend wirkt. Die formschlüssig wirkenden Fügeelemente können einteilig mit den Nocken und/oder dem Verstellglied ausgebildet oder sogar an diesen angeformt sein. Beispielsweise können zwischen den Nocken und/oder dem Verstellglied Gewindeverbindungen, Bajonettverbindungen, Hinterschnittverbindungen oder sonstige Verbindungen vorgesehen sein, oder es sind Fügeelemente wie Nutensteine oder dergleichen vorgesehen. Grundsätzlich kann jede mögliche Verbindungsausführung zwischen den Nocken und/oder dem Verstellglied vorgesehen sein, um diese mechanisch belastbar miteinander zu verbinden. Die Verbindung der Nocken und/oder des Verstellgliedes sollte vorzugsweise spielfrei herstellbar sein, und die Verbindung sollte die rotatorische Position der Elemente um die gemeinsame Wellenachse aufrechterhalten.

Nach einer weiteren vorteilhaften Ausführungsform kann das Nockenpaket wenigstens ein Lagerelement umfassen, das vorzugsweise zur Bildung einer Nullhubnocke ausgebildet ist. Eine Nullhubnocke weist eine zylindrische Mantelfläche auf, wobei das Lagerelement eine axiale Breite aufweisen kann, die sowohl die Lagerung des Nockenpaketes über das Lagerelement als auch die gleichzeitige Wirkverbindung des Lagerelementes mit einem Abgriffselement zur Ventilsteuerung ermöglicht.

Die Erfindung betrifft ferner ein Nockenpaket umfassend zumindest zwei Nocken und wenigstens ein Verstellglied zur axialen Verstellung des Nockenpaketes auf einer Trägerwelle, wobei die Nocken und das wenigstens eine Verstellglied in axial benachbarter Anordnung mit einem Trägerkörper eingegossen und durch diesen miteinander verbunden sind und als Verbund zur direkten Anordnung auf der Trägerwelle ausgebildet sind, wobei die Nocken und/oder das Verstellglied eine Innenverzahnung aufweisen, die mit einer Außenverzahnung der Trägerwelle axial verschiebbar im Eingriff bringbar ist. Die Vorteile und Ausführungsformen der vorstehend bezeichneten Nockenwelle mit einem entsprechenden Nockenpaket finden für das gattungsbildende Nockenpaket ebenfalls Berücksichtigung.

Die Erfindung betrifft weiterhin ein Verfahren zur Herstellung einer Nockenwelle mit einer Trägerwelle, die in einer Wellenachse drehbeweglich lagerbar ist, wobei auf der Trägerwelle wenigstens ein Nockenpaket axial verschieblich angeordnet wird und wobei das Nockenpaket wenigstens zwei Nocken und wenigstens ein Verstellglied zur axialen Verstellung des Nockenpaketes umfasst, wobei erfindungsgemäß das Verfahren wenigstens die Schritte des Anordnens wenigstens zweier Nocken in eine zum Verstellglied benachbarte Position, des wenigstens teilweisen Umgießens der Nocken und des Verstellgliedes mit einem Trägerkörper zur Bildung eines Verbundes und das direkte Anordnen des Verbundes auf der Trägerwelle umfasst, wobei die Nocken und/oder das Verstellglied eine Innenverzahnung aufweisen, die mit einer Außenverzahnung der Trägerwelle axial verschiebbar im Eingriff gebracht wird.

Das Verfahren umfasst damit das Einbringen einer Innenverzahnung in die Nocken und/oder in das Verstellglied, um mit einer Außenverzahnung auf der Trägerwelle axial verschiebbar im Eingriff zu stehen. Die Innenverzahnung wird dabei direkt in das Material der Nocken und/oder des Verstellgliedes eingebracht. Gemäß einem weiteren Verfahrensschritt wird in wenigstens eine Nocke und/oder in das Verstellglied zumindest eine Rastnut eingebracht, die zur axialen Verrastung des Nockenpaketes mit einem Rastmittel zusammenwirken kann, das in der Trägerwelle angeordnet ist.

Nach einer möglichen Ausführungsform des erfindungsgemäßen Verfahrens kann die Innenverzahnung jeweils einzeln in die Nocken und in das Verstellglied eingebracht werden, wobei erst anschließend die Nocken und das Verstellglied in axial benachbarter Anordnung gegenseitig gefügt werden.

Alternativ können die Nocken und das Verstellglied in axial benachbarter Anordnung gegenseitig gefügt werden, wobei erst anschließend die Innenverzahnung in die Nocken und in das Verstellglied eingebracht wird. Auf gleiche Weise kann die zumindest eine Rastnut vor oder nach dem Fügen der Nocken und des Verstellgliedes miteinander eingebracht werden.

Weiterhin kann das Verfahren vorsehen, dass das Verstellglied zweiteilig ausgebildet ist, und ein erster Teil ist durch ein Steuerkonturelement gebildet, das mit einem Abschnitt des Trägerkörpers im Gießverfahren teilweise umgossen wird. Das Steuerkonturelement selbst bildet dabei eine Art Ringkörper, der wie auch die Nockenelemente in Position gebracht werden, um anschließend den Trägerkörper an die Elemente anzugießen.

Zur Ausführung des Verfahrens kann der wenigstens eine Nocken und das Verstellglied im Urformwerkzeug in jeweils axial benachbarter Anordnung zueinander eingebracht werden, wobei anschließend der Trägerkörper durch ein Gussverfahren in einen durch das Urformwerkzeug, die Nocken und das Verstellglied begrenzten Hohlraum eingegossen wird. Die Nocken und das Verstellglied beziehungsweise das Steuerkonturelement können beim Einlegen in das Urformwerkzeug bereits so positioniert und gehalten werden, dass die spätere Position zur Bildung des Nockenpaketes bereits durch das Urformwerkzeug erzeugt wird. Der Werkstoff zur Bildung des Trägerkörpers kann anschließend in das Urformwerkzeug eingegossen oder eingespritzt werden, sodass dieses anschließend aushärtet. Somit ist ein Verbund gebildet, der die Nocken und das Verstellglied beziehungsweise das Steuerkonturelement zu einem Nockenpaket zusammenhält.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine quergeschnittene Ansicht durch eine nicht beanspruchte Nockenwelle,
- Figur 2: eine quergeschnittene Ansicht eines Nockenpaketes gemäß einem nicht beanspruchten Ausführungsbeispiel zur Bildung der Verbindungen zwischen den Nocken und dem Verstellglied,
- Figur 3: eine quergeschnittene Ansicht eines Nockenpaketes gemäß einem weiteren, nicht beanspruchten Ausführungsbeispiel zur Bildung der Verbindungen zwischen den Nocken und dem Verstellglied,
- Figur 4: eine quergeschnittene Ansicht eines Nockenpaketes gemäß einem weiteren, nicht beanspruchten Ausführungsbeispiel zur Bildung der Verbindungen zwischen den Nocken und dem Verstellglied,
- Figur 5: ein weiteres nicht beanspruchtes Ausführungsbeispiel eines Nockenpaketes, das zur Lagerung in einem Lager ein Lagerelement aufweist,
- Figur 6: ein Ausführungsbeispiel eines Nockenpaketes mit den Merkmalen der vorliegenden Erfindung umfassend einen angegossenen Körper, und
- Figur 7: das Ausführungsbeispiel des Nockenpaketes gemäß Figur 6 in einer Explosionsdarstellung.

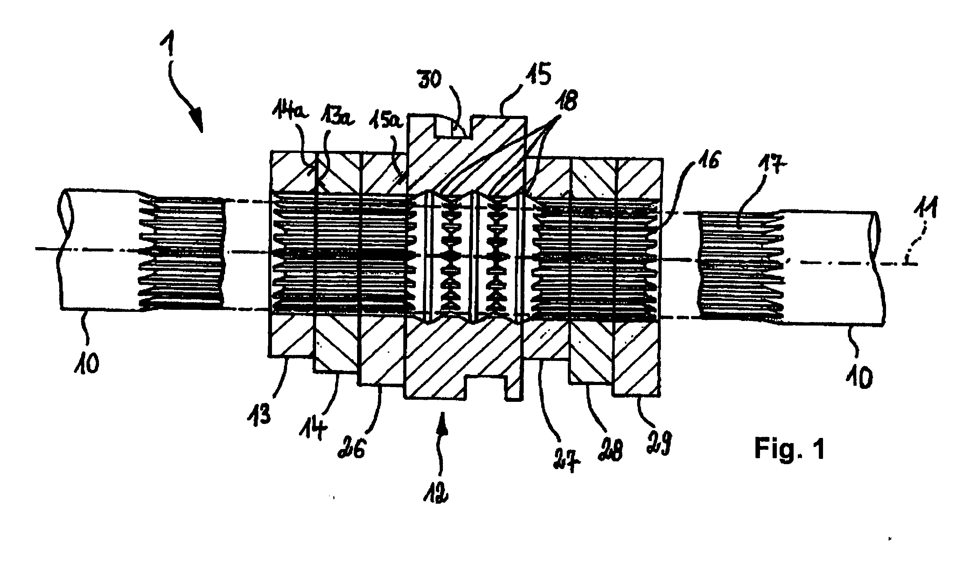

In Figur 1 ist ein Ausführungsbeispiel einer Nockenwelle 1 mit einem Nockenpaket 12 gezeigt. Die Nockenwelle 1 weist eine Trägerwelle 10 auf, die im Setzbereich des Nockenpaketes 12 unterbrochen gezeigt ist. Die Trägerwelle 10 kann in einer Wellenachse 11 drehbeweglich lagerbar sein, beispielsweise im Zylinderkopf einer Brennkraftmaschine.

Das Nockenpaket 12 weist beispielhaft sechs Nocken 13, 14, 26, 27, 28 und 29 auf, wobei ein Verstellglied 15 vorgesehen ist, und im Verstellglied 15 ist eine Nutenführung 30 auf dem Außenumfang des Verstellgliedes 15 eingebracht. Die Nocken 13, 14 und 26 befinden sich auf einer ersten Seite des Verstellgliedes 15, und die Nocken 27, 28 und 29 befinden sich auf einer gegenüberliegenden, zweiten Seite des Verstellgliedes 15. Durch die Nocken 13, 14, 26, 27, 28, 29 und durch das Verstellglied 15 erstreckt sich eine Durchgangsbohrung, durch die die Trägerwelle 10 hindurchgeführt ist. In dieser durch die einzelnen Komponenten des Nockenpaketes 12 gebildeten Durchgangsbohrung ist eine Innenverzahnung 16 eingebracht, die mit einer Außenverzahnung 17 auf der Trägerwelle 10 axial verschiebbar und drehmomentübertragend in Eingriff steht. Die Außenverzahnung 17 der Trägerwelle 10 ist in Richtung zur Wellenachse 11 breiter ausgeführt als die Breite des Nockenpaketes 12, und das Nockenpaket 12 kann in Richtung zur Wellenachse axial verstellt werden, indem ein Verstellelement in der Nutenführung 30 des Verstellgliedes 15 geführt wird. Durch den Formschluss der Innenverzahnung 16 und der Außenverzahnung 17 wird dabei zugleich eine Drehbewegung der Trägerwelle 10 auf das Nockenpaket 12 übertragen.

Die Nocken 13, 14, 26, 27, 28, 29 und das Verstellglied 15 sind in axial benachbarter Anordnung zueinander miteinander verbunden, sodass durch die Verbindung dieser Komponenten des Nockenpaketes 12 über ihre jeweiligen sich in axialer Richtung ausbildenden Stirnseiten ein Verbund geschaffen wird, der bereits das Nockenpaket 12 bildet. Dazu ist erfindungsgemäß kein Trägerrohr notwendig, auf dem die einzelnen Komponenten wie die Nocken 13, 14, 26, 27, 28, 29 und das Verstellglied 15 angeordnet werden müssen. Damit können die Innenverzahnung 16 und mehrere Rastnuten 18 direkt in die Nocken 13, 14, 26, 27, 28, 29 und in das Verstellglied 15 eingebracht werden, wobei beispielhaft drei Rastnuten 18 innenseitig in das Verstellglied 15 eingebracht sind, die zur axialen Verrastung des Nockenpaketes 12 mit einem Rastmittel zusammenwirken können, das in der Trägerwelle 10 in nicht näher gezeigter Weise angeordnet ist.

Die Nocken 13, 14, 26, 27, 28, 29 weisen jeweils unterschiedliche Nockenkonturen auf, beispielsweise können die Nocken 13, 14, 26, 27, 28, 29 unterschiedliche Nockenkuppen aufweisen oder die Nockenkuppen sind in unterschiedlichen Winkeln über dem Umfang ausgebildet. Durch die axiale Verstellbarkeit des Nockenpaketes 12 können Abgreifelemente, die eine feste axiale Position aufweisen, mit verschiedenen Nocken 13, 14, 26 oder 27, 28, 29 zusammenwirken, um beispielsweise den Ventilhub, jedoch beispielsweise auch Ventilsteuerzeiten zu ändern.

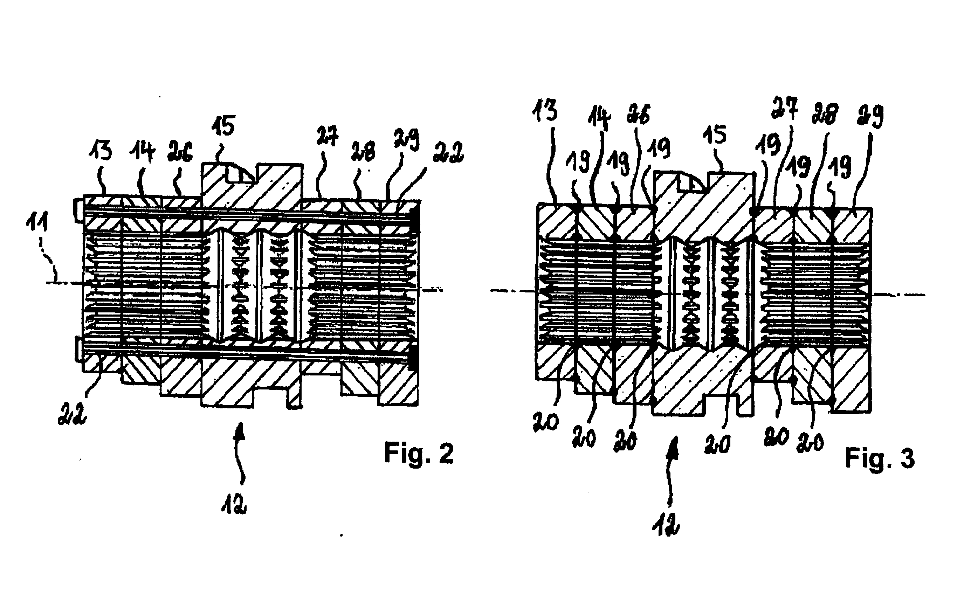

Figur 2 zeigt ein nicht beanspruchtes Ausführungsbeispiel zur Bildung des Verbundes der Nocken 13, 14, 26, 27, 28, 29 und des Verstellgliedes 15. Die Verbindung ist durch Zuganker 22 gebildet, und es sind beispielhaft zwei Zuganker 22 über dem Umfang des Nockenpaketes 12 dargestellt, wobei insbesondere mehr als zwei Zuganker 22 vorgesehen sein können, die gleichverteilt auf dem Umfang des Nockenpaketes 12 angeordnet sind. Die Zuganker 22 erstrecken sich parallel zur Wellenachse 11 durch die Nocken 13, 14, 26, 27, 28, 29 und das Verstellglied 15, und sind unter axiale Zugspannung gesetzt. Damit werden die Komponenten des Nockenpaketes 12 stirnseitig aufeinander gepresst, um einen mechanisch belastbaren Verbund zu bilden. Die Zuganker 22 können als Schraubelemente oder als Spannstifte ausgebildet werden, um in die Zuganker 22 eine Zugspannung einzubringen.

Figur 3 zeigt ein weiteres, nicht beanspruchtes Ausführungsbeispiel zur Bildung des Nockenpaketes 12, wobei die Verbindungen zwischen den Nocken 13, 14, 26, 27, 28, 29 und dem Verstellglied 15 über Schweißverbindungen 19, 20 ausgeführt sind. Die Schweißverbindungen 19 sind als außenumfängliche Schweißverbindungen und die Schweißverbindungen 20 sind als innenumfängliche Schweißverbindungen ausgebildet. Die außenumfänglichen und innenumfänglichen Schweißverbindungen 19 und 20 sind lediglich beispielhaft gezeigt, wobei beispielsweise auch lediglich innenumfängliche Schweißverbindungen 20 ausreichend sein können, um einen mechanisch belastbaren Verbund der Komponenten des Nockenpaketes 12 zu bilden. Beispielsweise können die Schweißverbindungen 19 und 20 durch Laserstrahl-Schweißungen oder durch Elektronenstrahl-Schweißungen erzeugt werden, um die thermische Einwirkung auf die Nocken 13, 14, 26, 27, 28, 29 und das Verstellglied 15 zu minimieren.

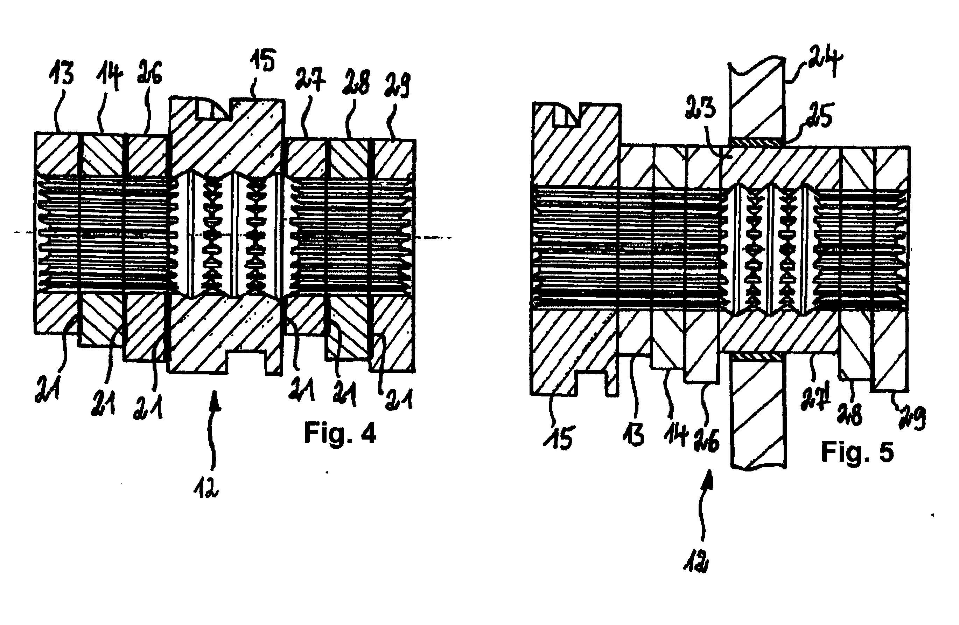

Figur 4 zeigt ein weiteres, nicht beanspruchtes Ausführungsbeispiel zur Bildung des Nockenpaketes 12, wobei die Nocken 13, 14, 26, 27, 28, 29 untereinander und das Verstellglied 15 mit den benachbarten Nocken 26, 27 durch Lötverbindungen 21 verbunden sind. Die Lötverbindungen 21 können beispielsweise durch Lötfolien vorbereitet werden, die zwischen den einzelnen Komponenten des Nockenpaketes 12 angeordnet werden, und nach Anordnung der Nocken 13, 14, 26, 27, 28, 29 und des Verstellgliedes 15 in axial benachbarter Anordnung zueinander kann das derart vorbereitete Nockenpaket 12 auf Lotschmelztemperatur gebracht werden, um die Lötverbindungen 21 fertigzustellen. Alternativ zu den gezeigten Lötverbindungen 21 können Klebeverbindungen zwischen den Komponenten des Nockenpaketes 12 vorgesehen sein.

Figur 5 zeigt schließlich eine weitere, nicht beanspruchte Ausführungsform eines Nockenpaketes 12 mit einem Verstellglied 15 und Nocken 13, 14, 26, 27', 28, 29, wobei die Nocke 27' zugleich als Lagerelement 23 ausgeführt ist. Die Nocke 27' ist als Nullhubnocke ausgeführt, und weist einen zylindrischen Außenumfang auf. Neben dem - nicht weiter gezeigten - Abgriff durch ein Abgriffselement zur Ventilsteuerung ist das Nockenpaket 12 in einem Lagerbock 24 gelagert, in den ein Lager 25 eingebracht ist. Damit erfüllt die Nocke 27' sowohl eine Nullhubfunktion zur Ventilsteuerung als auch die Funktion zur Lagerung des Nockenpaketes 12. Die Verbindung zwischen den Komponenten des Nockenpaketes 12 kann gemäß dem Ausführungsbeispiel in Figur 2, in Figur 3 oder in Figur 4 ausgeführt sein.

Im Ergebnis wird ein Nockenpaket 12 geschaffen, das ohne die Verwendung eines Trägerrohres ausgebildet werden kann. Weiterhin bleibt die Möglichkeit erhalten, die verschiedenen Komponenten des Nockenpaketes 12 jeweils einzeln mechanischen und/oder thermischen Bearbeitungsschritten zuzuführen, um die Komponenten erst anschließend zu einem Nockenpaket 12 miteinander zu verbinden.

Die Innenverzahnung 16, die in die Nocken 13, 14, 26, 27, 28, 29 und in das Verstellglied 15 eingebracht ist, kann in die jeweiligen Komponenten vor der Herstellung der Fügeverbindungen einzeln eingebracht werden oder die Innenverzahnung 16 wird in das Nockenpaket 12 eingebracht, wenn die Fügeverbindungen zwischen den einzelnen Komponenten bereits hergestellt ist.

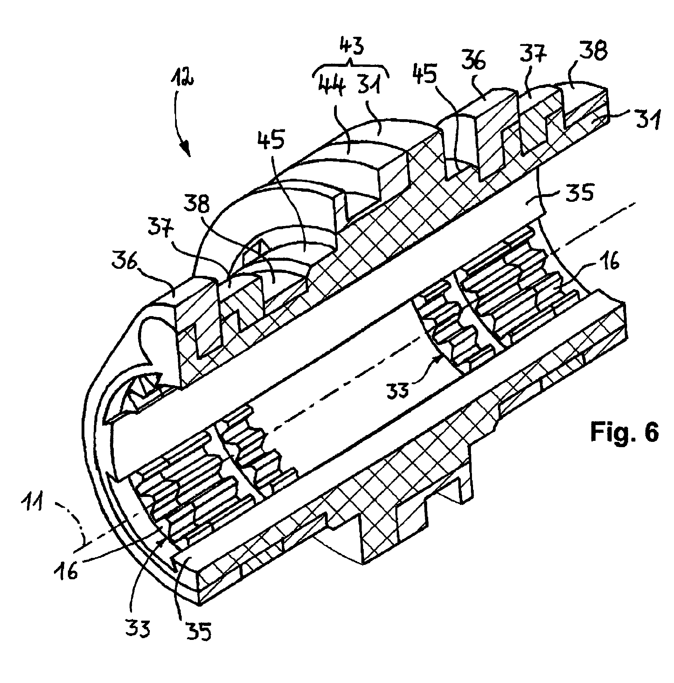

Figur 6 zeigt ein Beispiel einer erfindungsgemäßen Ausführung eines Nockenpaketes 12, das sich entlang der Wellenachse 11 erstreckt und auf einer Trägerwelle 10 aufgenommen werden kann, wie diese in Figur 1 gezeigt ist. Das Ausführungsbeispiel des Nockenpaketes 12 zeigt Nocken 36, 37 und 38, die eine Nockengruppe bilden, und es ist ein Verstellglied 43 gezeigt, wobei sich auf einer ersten Seite des Verstellgliedes 43 eine erste Nockengruppe aus den Nocken 36, 37 und 38 befindet, und auf einer gegenüberliegenden, zweiten Seite des Verstellgliedes 43 befindet sich eine weitere Nockengruppe aus den gleichen Nocken 36, 37 und 38. Der Nocken 38 ist dabei in beiden Nockengruppen beispielhaft als Nullhubnocken ausgebildet. Alternativ kann auch nur eine Nockengruppe auf einer Seite des Verstellgliedes 43 vorgesehen sein.

Zur Verbindung der Nocken 36, 37 und 38 untereinander sowie zur Verbindung der Nocken mit dem Verstellglied 43 ist ein Trägerkörper 31 gezeigt, der mit den Nocken 36, 37 und 38 sowie mit einem Steuerkonturelement 44 des Verstellgliedes 43 vergossen ist. Damit erstreckt sich der Trägerkörper 31 über der gesamten Länge des Nockenpaketes 12 hinweg, und die Nocken 36, 37 und 38 sowie das Steuerkonturelement 44 weisen Durchgangsbohrungen auf, durch die sich der einteilige Trägerkörper 31 hindurch erstreckt. Zum Gießen des Trägerkörpers 31 können jeweils zwei der Nocken 36, 37 und 38 in jeweiliger Position zur Bildung der Nockengruppen sowie das Steuerkonturelement 44 in ein Urformwerkzeug eingelegt werden, welches weitere Werkzeugformteile besitzt, um den Durchgang durch den Trägerkörper 31 zu bilden. Sind die Nocken 36, 37 und 38 sowie das Steuerkonturelement 44 in das Urformwerkzeug eingelegt, so kann der Trägerkörper 31 eingegossen werden und aushärten. Der zentrale Durchgangsbereich durch das Nockenpaket 12 kann dabei durch ein Werkzeugformteil gebildet werden, der bewirkt, dass in den Innenbereichen Aussparungen 33 frei bleiben, durch die sich eine Innenverzahnung 16 hindurch erstrecken kann, die innenseitig in den Nocken 36, 37 und 38 vorhanden ist. Die Innenverzahnung 16 stellt dabei die Verbindung der Nocken 36 37 38 mit der Trägerwelle dar, wobei die Innenverzahnung innenseitig in den Nocken 36, 37 38 eingebracht ist. Auf weitere, nicht gezeigte Weise können auf der Innenseite des Nockenpaketes 12 Rastnuten vorgesehen sein.

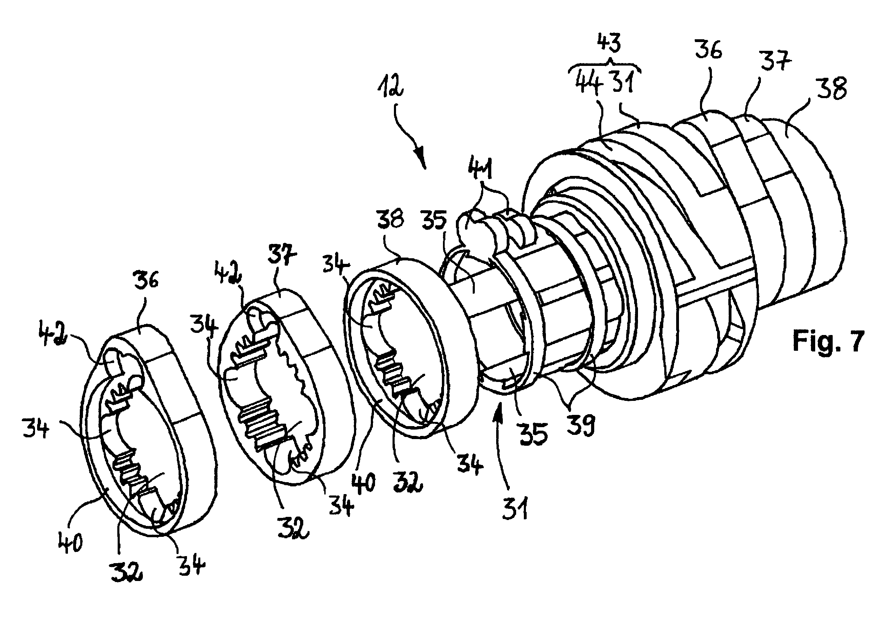

Das Steuerkonturelement 44 ist in den mittleren Bereich des Trägerkörpers 31 so eingebettet, dass sich mit dem entsprechenden Abschnitt des Trägerkörpers 31 das Verstellglied 43 ergibt. Entlang der Wellenachse 11 erstrecken sich durch die Innenseite Sicherungsabschnitte 35 hindurch, die in Ausbuchtungen in den Nocken 36, 37 und 38 eingreifen können, wie in der folgenden Figur 7 durch die Explosionsdarstellung näher gezeigt.

In Figur 7 ist das Nockenpaket 12 gemäß Figur 6 in einer Explosionsdarstellung gezeigt, wobei die Nocken 36, 37 und 38, die eine vorderseitige Nockengruppe auf einer ersten Seite des Verstellgliedes 43 bilden, vereinzelt dargestellt sind. Auf der zweiten, hinteren Seite des Verstellgliedes 43 sind weitere Nocken 36, 37 und 38 in bereits zueinander positionierter Anordnung gezeigt.

Das Verstellglied 43 ist aus einem Steuerkonturelement 44 und einem Körperabschnitt des Trägerkörpers 31 gebildet, und das Steuerkonturelement 44 weist eine außenseitige Steuerkontur auf, die mit einem Steuergerät zusammenwirken kann, das ruhend neben der Nockenwelle angeordnet ist und eine Verschiebung des Nockenpaketes 12 auf der Trägerwelle 10 entlang der Wellenachse 11 ermöglicht, siehe hierzu Figur 1.

Durch die einzelne Darstellung der Nocken 36, 37 und 38 ist erkennbar, dass diese jeweils eine Durchgangsbohrung 32 aufweisen, durch die sich ein Teil des Trägerkörpers 31 hindurch erstreckt. Der die Nocken 36, 37 und 38 verbindende Teil des Trägerkörpers 31 weist eine korbartige Struktur mit Sicherungsabschnitten 35 und umlaufenden Kragen 39 auf. Die Sicherungsabschnitte 35 können dabei in Ausbuchtungen 34 eingreifen, die in der Innenseite der Durchgangsbohrung 32 eingebracht sind und zur Stabilisierung und Sicherung gegen Verdrehung der Nocken 36, 37 und 38 und des Verstellgliedes 43 in Umfangsrichtung relativ zueinander dienen. Die umlaufenden Kragen 39 sitzen in Ausnehmungen 40, die auf der Seite der Nocken 36 und 38 vorhanden sind. Durch den Formschluss der umlaufenden Kragen 39 des Trägerkörpers 31 mit den Ausnehmungen 40 in den Nocken 36 und 38 werden die Nocken 36, 37 und 38 axial gesichert und mechanisch belastbar mit dem Verstellglied 43 verbunden, das aus dem Steuerkonturelement 44 und einem Abschnitt des gegossenen Trägerkörpers 31 gebildet ist.

Weiterhin sind Aussparungen 42 an einer radialen Position unter der Nockengruppe der Nocken 36 und 37 gezeigt, und in die Aussparungen 42 greifen Anformungen 41 ein, die an dem Trägerkörper 31 angeformt sind.

Die geometrischen Ausgestaltungen am Trägerkörper 31 entstehen durch entsprechende Abformungen an den Nocken 36, 37 und 38 sowie am Steuerkonturelement 44. Die in Figur 6 gezeigten freien Flächen des gegossenen Trägerkörpers 31 werden an Werkzeugteilen abgeformt, die Bestandteil eines Urformwerkzeugs sind, in das die Nocken 36, 37 und 38 sowie das Steuerkonturelement 44 vor dem Eingießen des Werkstoffes zur Bildung des Trägerkörpers 31 eingebracht sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten oder räumlichen Anordnungen, können sowohl für sich als auch in den verschiedensten Kombinationen erfindungswesentlich sein.

### Bezugszeichenliste

- 1: Nockenwelle

- 10: Trägerwelle
- 11: Wellenachse
- 12: Nockenpaket
- 13: Nocken, 13a Stirnseite
- 14: Nocken, 14a Stirnseite
- 15: Verstellglied, 15a Stirnseite
- 16: Innenverzahnung
- 17: Außenverzahnung
- 18: Rastnut
- 19: außenumfängliche Schweißverbindung
- 20: innenumfängliche Schweißverbindung
- 21: Lötverbindung
- 22: Zuganker
- 23: Lagerelement
- 24: Lagerbock
- 25: Lager
- 26: Nocke
- 27: Nocke
- 27': Nocke
- 28: Nocke
- 29: Nocke
- 30: Nutenführung
- 31: Trägerkörper
- 32: Durchgangsbohrung
- 33: Aussparung
- 34: Ausbuchtung
- 35: Sicherungsabschnitt
- 36: Nocke
- 37: Nocke
- 38: Nocke
- 39: umlaufender Kragen
- 40: Ausnehmung
- 41: Anformung
- 42: Aussparung
- 43: Verstellglied
- 44: Steuerkonturelement
- 45: Bund

## Patentansprüche

1. Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet ist, und wobei das Nockenpaket (12) wenigstens zwei Nocken (13, 14, 26, 27, 28, 29, 36, 37, 38) und wenigstens ein Verstellglied (15, 43) zur axialen Verstellung des Nockenpaketes (12) umfasst, **wobei** die Nocken (13, 14, 26, 27, 28, 29, 36, 37, 38) und das wenigstens eine Verstellglied (15, 43) in axial benachbarter Anordnung mit einem Trägerkörper (31) eingegossen und durch diesen miteinander verbunden sind,
**dadurch gekennzeichnet,**
**dass** die Nocken (13, 14, 26, 27, 28, 29, 36, 37, 38) und/oder das Verstellglied (15) eine Innenverzahnung (16) aufweisen, die mit einer Außenverzahnung (17) der Trägerwelle (10) axial verschiebbar im Eingriff steht.

2. Nockenwelle (1) nach Anspruch 1, **dadurch gekennzeichnet, dass** die Nocken (13, 14, 26, 27, 28, 29, 36, 37, 38) und das wenigstens eine Verstellglied (15, 43) jeweils Durchgangsbohrungen (32) aufweisen, wobei sich der gegossene Trägerkörper (31) durch die Durchgangsbohrungen (32) im Wesentlichen über der gesamten Länge des Nockenpaketes (12) erstreckt.

3. Nockenwelle (1) nach Anspruch 1 oder 2, **dadurch gekennzeichnet, dass** der gegossene Trägerkörper (31) Aussparungen (33) aufweist, durch die sich die Innenverzahnung (16) radial nach innen weisend hindurch erstreckt, insbesondere wobei in den Durchgangsbohrungen (32) Ausbuchtungen (34) vorgesehen sind, in die ein Sicherungsabschnitt (35) des Trägerkörpers (31) eingebracht ist.

4. Nockenwelle (1) nach einem der Ansprüche 1 bis 3, **dadurch gekennzeichnet, dass** der gegossene Trägerkörper (31) umlaufende Kragen (39) aufweist, die in Ausnehmungen (40) eingegossen sind, die in den Nocken (13, 14, 26, 27, 28, 29, 36, 37, 38) eingebracht sind, sodass eine axiale Sicherung der Nocken (13, 14, 26, 27, 28, 29, 36, 37, 38) gebildet ist.

5. Nockenwelle (1) nach einem der vorgenannten Ansprüche, **dadurch gekennzeichnet, dass** der gegossene Trägerkörper (31) Anformungen (41) aufweist, die sich in Aussparungen (42) hinein erstrecken, sodass eine Verdrehsicherung der Nocken (13, 14, 26, 27, 28, 29, 36, 37, 38) gebildet ist.

6. Nockenwelle (1) nach einem der vorgenannten Ansprüche, **dadurch gekennzeichnet, dass** die Nocken (13, 14, 26, 27, 28, 29) und das wenigstens eine Verstellglied (15) zumindest über Teilbereiche ihrer jeweiligen Stirnseiten (13a, 14a, 15a) miteinander verbunden sind, wobei die Verbindungen vorzugsweise als stoffschlüssige Verbindungen und insbesondere als Schweißverbindungen (19, 20), als Lötverbindungen (21) oder als Klebeverbindungen ausgeführt sind, wobei die Schweißverbindungen (19, 20) vorzugsweise außenumfängliche Schweißverbindungen (19) und/oder innenumfängliche Schweißverbindungen (20) umfassen.

7. Nockenwelle (1) nach einem der vorgenannten Ansprüche, **dadurch gekennzeichnet, dass** das Verstellglied (43) wenigstens zweiteilig ausgebildet ist, wobei ein erster Teil durch ein Steuerkonturelement (44) und ein zweiter Teil durch den gegossenen Trägerkörper (31) gebildet ist, insbesondere wobei das Steuerkonturelement (44) im Trägerkörper (31) eingebettet ist.

8. Nockenwelle (1) nach einem der vorgenannten Ansprüche, **dadurch gekennzeichnet, dass** der Trägerkörper (31) in einem Spritzgussverfahren oder in einem Druckgussverfahren in die Durchgangsbohrungen (32) gegossen ist, wobei das Material des Trägerkörpers (31) aus Aluminium, aus Magnesium oder aus Kunststoff gebildet ist.

9. Nockenwelle (1) nach einem der vorgenannten Ansprüche, **dadurch gekennzeichnet, dass** das Nockenpaket (12) wenigstens ein Lagerelement (23) umfasst, das vorzugsweise zur Bildung einer Nullhubnocke ausgebildet ist.

10. Nockenpaket (12) umfassend zumindest zwei Nocken (13, 14, 26, 27, 28, 29, 36, 37, 38) und wenigstens ein Verstellglied (15, 43) zur axialen Verstellung des Nockenpaketes (12) auf einer Trägerwelle (10),
wobei die Nocken (13, 14, 26, 27, 28, 29, 36, 37, 38) und das wenigstens eine Verstellglied (15, 43) in axial benachbarter Anordnung mit einem Trägerkörper (31) eingegossen und durch diesen miteinander verbunden sind und als Verbund zur direkten Anordnung auf der Trägerwelle (10) ausgebildet sind,
**dadurch gekennzeichnet,**
**dass** die Nocken (13, 14, 26, 27, 28, 29, 36, 37, 38) eine Innenverzahnung (16) aufweisen, die mit einer Außenverzahnung (17) der Trägerwelle (10) axial verschiebbar in Eingriff bringbar ist.

11. Verfahren zur Herstellung einer Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet wird und wobei das Nockenpaket (12) wenigstens zwei Nocken (13, 14, 26, 27, 28, 29, 36, 37, 38) und wenigstens ein Verstellglied (15, 43) zur axialen Verstellung des Nockenpaketes (12) umfasst,
umfassend wenigstens die folgenden Schritte:
- Anordnen wenigstens zweier Nocken (13, 14, 26, 27, 28, 29, 36, 37, 38) in eine zum Verstellglied (15, 43) benachbarte Position,
- wenigstens teilweises Umgießen der Nocken (13, 14, 26, 27, 28, 29, 36, 37, 38) und des Verstellgliedes (15, 43) mit einem Trägerkörper (31) zur Bildung eines Verbundes und
**gekennzeichnet durch**
ein direktes Anordnen des Verbundes auf der Trägerwelle (10), wobei die Nocken (13, 14, 26, 27, 28, 29, 36, 37, 38) eine Innenverzahnung (16) aufweisen, die mit einer Außenverzahnung (17) der Trägerwelle (10) axial verschiebbar in Eingriff gebracht wird.

12. Verfahren nach Anspruch 11, **dadurch gekennzeichnet, dass** das Verstellglied (15, 43) wenigstens zweiteilig ausgebildet ist, wobei ein erster Teil durch ein Steuerkonturelement (43) gebildet ist, das mit einem Abschnitt des Trägerkörpers (31) im Gießverfahren teilweise umgossen wird.

13. Verfahren nach Anspruch 11 oder 12, **dadurch gekennzeichnet, dass** der wenigstens eine Nocken (13, 14, 26, 27, 28, 29, 36, 37, 38) und das Verstellglied (15, 43) in ein Urformwerkzeug in axial benachbarter Anordnung zueinander eingebracht werden, wobei anschließend der Trägerkörper (31) durch ein Gussverfahren in einen durch das Urformwerkzeug, die Nocken (13, 14, 26, 27, 28, 29, 36, 37, 38) und das Verstellglied (15, 43) begrenzten Hohlraum eingegossen wird.

## Claims

1. Camshaft (1) having a carrier shaft (10) which can be mounted so as to be rotatable about a shaft axis (11), wherein at least one cam assembly (12) is arranged in axially displaceable fashion on the carrier shaft (10), and wherein the cam assembly (12) comprises at least two cams (13, 14, 26, 27, 28, 29, 36, 37, 38) and at least one adjustment element (15, 43) for the axial adjustment of the cam assembly (12), wherein the cams (13, 14, 26, 27, 28, 29, 36, 37, 38) and the at least one adjustment element (15, 43), in an axially adjacent arrangement, have a carrier body (31) cast into them and are connected to one another by way of said carrier body,
**characterized**
**in that** the cams (13, 14, 26, 27, 28, 29, 36, 37, 38) and/or the adjustment element (15) have an internal toothing (16) which is in engagement, in axially displaceable fashion, with an external toothing (17) of the carrier shaft (10).

2. Camshaft (1) according to Claim 1, **characterized in that** the cams (13, 14, 26, 27, 28, 29, 36, 37, 38) and the at least one adjustment element (15, 43) each have passage bores (32), wherein the cast carrier body (31) extends through the passage bores (32) substantially over the entire length of the cam assembly (12).

3. Camshaft (1) according to Claim 1 or 2, **characterized in that** the cast carrier body (31) has cutouts (33) through which the internal toothing (16) extends so as to point radially inward, wherein in particular, indentations (34) are provided in the passage bores (32), into which indentations a securing section (35) of the carrier body (31) is inserted.

4. Camshaft (1) according to one of Claims 1 to 3, **characterized in that** the cast carrier body (31) has encircling collars (39) which are cast into recesses (40) which are formed in the cams (13, 14, 26, 27, 28, 29, 36, 37, 38), such that a means for axial securing of the cams (13, 14, 26, 27, 28, 29, 36, 37, 38) is formed.

5. Camshaft (1) according to one of the preceding claims, **characterized in that** the cast carrier body (31) has integrally formed protuberances (41) which extend into cutouts (42), such that a means for prevention of relative rotation of the cams (13, 14, 26, 27, 28, 29, 36, 37, 38) is formed.

6. Camshaft (1) according to one of the preceding claims, **characterized in that** the cams (13, 14, 26, 27, 28, 29) and the at least one adjustment element (15) are connected to one another at least over subregions of their respective face sides (13a, 14a, 15a), wherein the connections are preferably in the form of cohesive connections and in particular in the form of welded connections (19, 20), brazed connections (21) or adhesive connections, wherein the welded connections (19, 20) preferably comprise outer-circumference welded connections (19) and/or inner-circumference welded connections (20).

7. Camshaft (1) according to one of the preceding claims, **characterized in that** the adjustment element (43) is formed at least in two parts, wherein a first part is formed by a control contour element (44) and a second part is formed by the cast carrier body (31), wherein in particular, the control contour element (44) is embedded in the carrier body (31).

8. Camshaft (1) according to one of the preceding claims, **characterized in that** the carrier body (31) is cast into the passage bores (32) in an injection-moulding process or in a die-casting process, wherein the material of the carrier body (31) is formed from aluminium, from magnesium or from plastic.

9. Camshaft (1) according to one of the preceding claims, **characterized in that** the cam assembly (12) comprises at least one bearing element (23) which is preferably designed to form a zero-lift cam.

10. Cam assembly (12) comprising at least two cams (13, 14, 26, 27, 28, 29, 36, 37, 38) and at least one adjustment element (15, 43) for the axial adjustment of the cam assembly (12) on a carrier shaft (10),
wherein the cams (13, 14, 26, 27, 28, 29, 36, 37, 38) and the at least one adjustment element (15, 43), in an axially adjacent arrangement, have a carrier body (31) cast into them and are connected to one another by way of said carrier body and are designed for direct arrangement, as a compound unit, on the carrier shaft (10),
**characterized**
**in that** the cams (13, 14, 26, 27, 28, 29, 36, 37, 38) have an internal toothing (16) which can be placed in engagement, in axially displaceable fashion, with an external toothing (17) of the carrier shaft (10).

11. Method for producing a camshaft (1) having a carrier shaft (10) which can be mounted so as to be rotatable about a shaft axis (11), wherein at least one cam assembly (12) is arranged in axially displaceable fashion on the carrier shaft (10), and wherein the cam assembly (12) comprises at least two cams (13, 14, 26, 27, 28, 29, 36, 37, 38) and at least one adjustment element (15, 43) for the axial adjustment of the cam assembly (12), comprising at least the following steps:
- arranging at least two cams (13, 14, 26, 27, 28, 29, 36, 37, 38) in a position adjacent to the adjustment element (15, 43),
- casting a carrier body (31) at least partially around the cams (13, 14, 26, 27, 28, 29, 36, 37, 38) and the adjustment element (15, 43), such that a compound unit is formed, and
**characterized by**
a direct arrangement of the compound unit on the carrier shaft (10), wherein the cams (13, 14, 26, 27, 28, 29, 36, 37, 38) have an internal toothing (16) which is placed in engagement, in axially displaceable fashion, with an external toothing (17) of the carrier shaft (10).

12. Method according to Claim 11, **characterized in that** the adjustment element (15, 43) is formed at least in two parts, wherein a first part is formed by a control contour element (43), around a part of which a section of the carrier body (31) is cast in a casting process.

13. Method according to Claim 11 or 12, **characterized in that** the at least one cam (13, 14, 26, 27, 28, 29, 36, 37, 38) and the adjustment element (15, 43) are placed, in an axially adjacent arrangement with respect to one another, into a primary forming tool, wherein subsequently, by way of a casting process, the carrier body (31) is cast into a cavity delimited by the primary forming tool, by the cams (13, 14, 26, 27, 28, 29, 36, 37, 38) and by the adjustment element (15, 43).

## Revendications

1. Arbre à cames (1) avec un arbre de support (10) pouvant être disposé de façon mobile en rotation dans un axe d'arbre (11), au moins un paquet de cames (12) étant disposé de façon à pouvoir coulisser dans le plan axial sur l'arbre de support (10) et le paquet de cames (12) comprenant au moins deux cames (13, 14, 26, 27, 28, 29, 36, 37, 38) et au moins un élément d'ajustement (15, 43) pour l'ajustement axial du paquet de cames (12), les cames (13, 14, 26, 27, 28, 29, 36, 37, 38) et l'au moins un élément d'ajustement (15, 43) étant moulés dans l'agencement connexe dans le plan axial avec un corps de support (31) et reliés entre eux par le biais de celui-ci, **caractérisé en ce que** les cames (13, 14, 26, 27, 28, 29, 36, 37, 38) et/ou l'élément d'ajustement (15) comportent un endentement intérieur (16) s'engrenant de façon à pouvoir coulisser dans le plan axial avec l'endentement extérieur (17) de l'arbre de support (10).

2. Arbre à cames (1) selon la revendication 1, **caractérisé en ce que** les cames (13, 14, 26, 27, 28, 29, 36, 37, 38) et l'au moins un élément d'ajustement (15, 43) comportent respectivement des alésages traversants (32), le corps de support (31) moulé s'étendant à travers les alésages traversants (32) pour l'essentiel sur toute la longueur du paquet de cames (12).

3. Arbre à cames (1) selon la revendication 1 ou 2, **caractérisé en ce que** le corps de support (31) moulé comporte des évidements (33) à travers lesquels s'étend l'endentement intérieur (16) orienté dans le plan radial vers l'intérieur, des bombements (34) étant notamment prévus, notamment amenés dans les alésages traversants (32), une section de fixation (35) du corps de support (31) étant notamment amenée dans lesdits bombements.

4. Arbre à cames (1) selon l'une quelconque des revendications 1 à 3, **caractérisé en ce que** le corps de support (31) moulé comporte des cols (39) périphériques moulés dans les évidements (40) amenés dans les cames (13, 14, 26, 27, 28, 29, 36, 37, 38), de sorte qu'une fixation axiale des cames (13, 14, 26, 27, 28, 29, 36, 37, 38) est réalisée.

5. Arbre à cames (1) selon l'une quelconque des revendications précédentes, **caractérisé en ce que** le corps de support (31) moulé comporte des surmoulages (41) s'étendant dans les évidements (42), de façon à réaliser une fixation anti-torsion des cames (13, 14, 26, 27, 28, 29, 36, 37, 38).

6. Arbre à cames (1) selon l'une quelconque des revendications précédentes, **caractérisé en ce que** les cames (13, 14, 26, 27, 28, 29) et l'au moins un élément d'ajustement (15) sont reliés entre eux via au moins des zones partielles de leurs côtés avant (13a, 14a, 15a) respectifs, les liaisons étant de préférence réalisées sous la forme de liaisons réalisées par complémentarité de matières et notamment sous la forme de liaisons soudées (19, 20), de liaisons brasées (21) ou de liaisons collées, les liaisons soudées (19, 20) comprenant de préférence des liaisons soudées (19) entourant tout l'extérieur et/ou des liaisons soudées (20) entourant tout l'intérieur.

7. Arbre à cames (1) selon l'une quelconque des revendications précédentes, **caractérisé en ce que** l'élément d'ajustement (43) est réalisé au moins en deux parties, une première partie étant formée par un élément de contour de commande (44) et une deuxième partie étant formée par le corps de support (31) moulé, l'élément de contour de commande (44) étant notamment logé dans le corps de support (31).

8. Arbre à cames (1) selon l'une quelconque des revendications précédentes, **caractérisé en ce que** le corps de support (31) est moulé dans les alésages traversants (32) dans un procédé de moulage par injection ou dans un procédé de coulée sous pression, le matériau du corps de support (31) étant formé en aluminium, en magnésium ou en matière plastique.

9. Arbre à cames (1) selon l'une quelconque des revendications précédentes, **caractérisé en ce que** le paquet de cames (12) comprend au moins un élément de palier de roulement (23) réalisé de préférence pour la formation d'une came de course nulle.

10. Paquet de cames (12) comprenant au moins deux cames (13, 14, 26, 27, 28, 29, 36, 37, 38) et au moins un élément d'ajustement (15, 43) pour l'ajustement axial du paquet de cames (12) sur un arbre de support (10), les cames (13, 14, 26, 27, 28, 29, 36, 37, 38) et l'au moins un élément d'ajustement (15, 43) étant moulés dans l'agencement connexe dans le plan axial avec un corps de support (31) et reliés entre eux par le biais de celui-ci, ainsi que réalisés sous la forme d'un groupe à agencer directement sur l'arbre de support (10), **caractérisé en ce que** les cames (13, 14, 26, 27, 28, 29, 36, 37, 38) comportent un endentement intérieur (16) pouvant être amené en prise avec un endentement extérieur (17) de l'arbre de support (10).

11. Procédé de fabrication d'un arbre à cames (1) avec un arbre de support (10) pouvant être disposé de façon mobile en rotation dans un axe d'arbre (11), au moins un paquet de cames (12) étant disposé de façon à pouvoir coulisser dans le plan axial sur l'arbre de support (10) et le paquet de cames (12) comprenant au moins deux cames (13, 14, 26, 27, 28, 29, 36, 37, 38) et au moins un élément d'ajustement (15, 43) pour l'ajustement axial du paquet de cames (12), comprenant au moins les étapes suivantes :
- mise en place d'au moins deux cames (13, 14, 26, 27, 28, 29, 36, 37, 38) dans une position connexe à l'élément d'ajustement (15, 43) ;
- moulage au moins partiel autour des cames (13, 14, 26, 27, 28, 29, 36, 37, 38) et de l'élément d'ajustement (15, 43) avec un corps de support (31) pour la formation d'un composite ; et
**caractérisé par** une mise en place directe du composite sur l'arbre de support (10), les cames (13, 14, 26, 27, 28, 29, 36, 37, 38) comportant un endentement intérieur (16) amené en prise, de façon à pouvoir être déplacé dans le plan axial, avec un endentement extérieur (17) de l'arbre de support (10).

12. Procédé selon la revendication 11, **caractérisé en ce que** l'élément d'ajustement (15, 43) est réalisé au moins en deux parties, une première partie étant formée par un élément de contour de commande (43) en partie moulé avec une section du corps de support (31) dans le procédé de coulée.

13. Procédé selon la revendication 11 ou 12, **caractérisé en ce que** l'au moins une came (13, 14, 26, 27, 28, 29, 36, 37, 38) et l'élément d'ajustement (15, 43) sont amenés l'un par rapport à l'autre, dans un agencement connexe dans le plan axial, dans un outil de moulage périphérique, le corps de support (31) étant ensuite moulé par un procédé de coulée dans un espace creux délimité par l'outil de moulage périphérique, les cames (13, 14, 26, 27, 28, 29, 36, 37, 38) et l'élément d'ajustement (15, 43).
